# EUROPEAN PATENT APPLICATION

(11) **EP 3 176 739 A1**
(43) Date of publication of application: **07.06.2017**
(21) Application number: 14898647.4
(22) Date of filing: 29.07.2014
(51) Int. Cl.: G06Q 20/06, G06Q 20/16

(54) **PROXY SETTLEMENT SYSTEM, PROXY SETTLEMENT DEVICE, ACTUAL STORE DEVICE, AND USER DEVICE**

(71) Applicant: Quadrac Co., Ltd., Minato-ku Tokyo 1070062 (JP)
(72) Inventor: KUSAKABE, Susumu, Tokyo 1070062 (JP)
(74) Representative: Hoffmann Eitle
(86) International application number: PCT/JP2014/069929
(87) International publication number: WO 2016/016945

(57) **Abstract**

The invention is concerning a proxy payment system including a user device, a physical store device provided in a physical store, an intermediary device provided in the physical store to communicate with the user device and the physical store device, and a proxy payment device provided on a network to make a payment to the physical store device on behalf of the user device in response to a request sent from the intermediary device over the network.

## Description

### [Technical Field]

This invention relates to a proxy payment system, a proxy payment device, a physical store device, and a user device.

### [Background Art]

In recent years, electronic payment means such as electronic money and a credit card have been widely available as payment means in place of cash (see Non Patent Literature 1 and 2).

### [Citation List]

### [Non Patent Literature]

[NPL 1] " 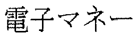 (electronic money) " in Wikipedia, The Free Encyclopedia; available from http://ja.wikipedia.org/wiki/ 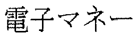 ; Internet; retrieved July 23, 2014
[NPL 2] " 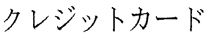 (credit card) " in *Wikipedia,* The Free Encyclopedia; available from http://ja.wikipedia.org/wiki/ 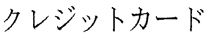 ; Internet; retrieved July 23, 2014

### [Summary of Invention]

### [Technical Problem]

However, a user and a physical store cannot use these kinds of electronic payment means at all unless the user and the physical store have hardware devices or software operating under the same protocol.

### [Solution to Problem]

The problem is solved by the following means.

A proxy payment system that includes a user device, a physical store device provided in a physical store, an intermediary device provided in the physical store to communicate with the user device and the physical store device, and a proxy payment device provided on a network to make a payment to the physical store device on behalf of the user device in response to a request sent from the intermediary device over the network.

A proxy payment device that is provided on a network and makes a payment to a physical store device provided in a physical store on behalf of a user device in response to a request sent over the network from an intermediary device that is provided in the physical store and communicates with the user device and the physical store device.

A physical store device that is provided in a physical store and communicates, at the physical store, with an intermediary device that transmits a request over a network to a proxy payment device that makes a payment on behalf of a user device.

A user device that communicates, at a physical store, with an intermediary device that transmits a request over a network to a proxy payment device that makes a payment to a physical store device.

### [Advantageous Effects of Invention]

The presence of the proxy payment system, the proxy payment device, the physical store device, and the user device allows a user and a physical store to use electronic payment means even if the user and the physical store do not have hardware devices or software operating under the same protocol. Therefore, by using the currently available user device and physical store device instead of replacing them with new ones, the user and the physical store can use, in various situations, various electronic payment means, which could not be used in the past due to incompatibility between the respective devices.

### [Brief Description of Drawings]

[Fig. 1]

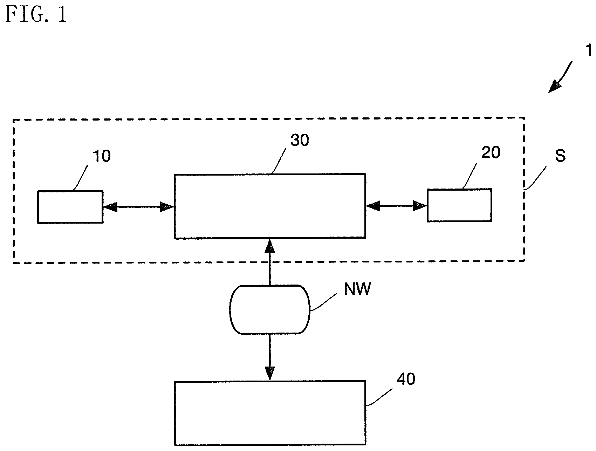

   Fig. 1 is a schematic diagram for illustrating a proxy payment system according to an embodiment.
[Fig. 2]

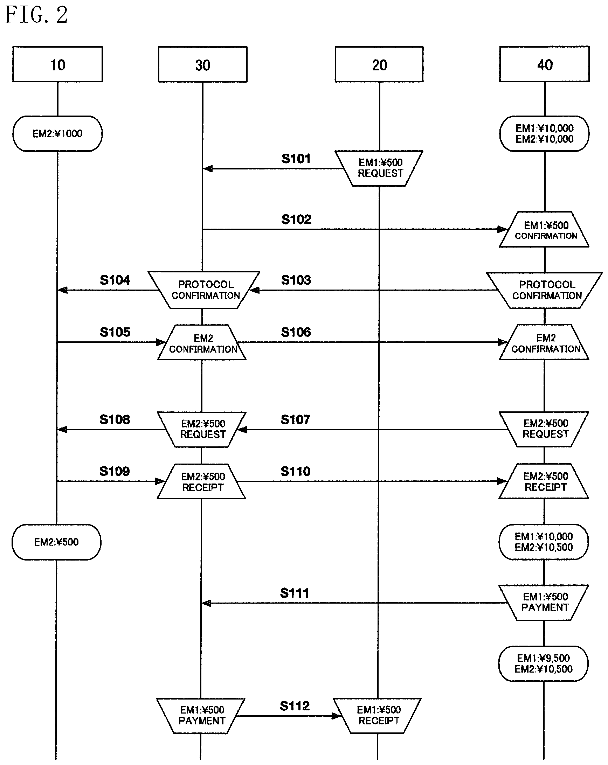

   Fig. 2 is a sequence diagram for illustrating exemplary operation of a proxy payment system according to the embodiment.

### [Description of Embodiments]

### [Proxy Payment System according to Embodiment]

Fig 1 is a schematic view for illustrating a proxy payment system according to an embodiment. As shown in Fig. 1, the proxy payment system 1 according to the embodiment includes a user device 10, a physical store device 20 provided in a physical store S, an intermediary device 30 provided in the physical store S to communicate with the user device 10 and the physical store device 20, and a proxy payment device 40 provided on a network NW to make a payment to the physical store device 20 on behalf of the user device 10 in response to a request sent from the intermediary device 30 over the network NW. In the proxy payment system 1 according to the embodiment, the proxy payment device 40 makes a payment to the physical store device 20 on behalf of the user device 10, and therefore the user and the physical store can use electronic payment means even if the user and the physical store do not have hardware devices or software operating under the same protocol. The system will be described in detail.

### (User Device 10)

The user device 10 is used by the user at the physical store S. The user device 10 may be a mobile phone or a smart phone that can be carried by the user.

### (Physical store Device 20)

The physical store device 20 is provided in the physical store S. The physical store S may include a prescribed space at a convenience store, a restaurant, a ticket gate floor or a platform at a train station and a prescribed outdoor space provided with a vending machine or a portable payment device. The physical store device 20 may be any of devices used with existing electronic payment means (such as electronic money and a credit card).

### (Intermediary Device 30)

The intermediary device 30 is provided in the physical store S and communicates with the user device 10 and the physical store device 20. The communication system between the intermediary device 30 and the user device 10 or between the intermediary device 30 and the physical store device 20 is not specifically limited. The intermediary device 30 may communicate with the user device 10 by near field radio communication and with the physical store device 20 by near field radio communication or wired communication. The communication system between the intermediary device 30 and the user device 10 may be the same as the communication system between the intermediary device 30 and the physical store device 20, while the embodiment can be particularly preferably applied when their communication systems are different. Note that the near field radio communication refers to for example NFC (near field communication) or infrared communication.

When the user device 10 and the physical store device 20 are provided with hardware devices or software operating under the same protocol, the intermediary device 30 transmits data received from the user device 10 or the physical store device 20 directly to the user device 10 or the physical store device 20 by bypassing without transmitting the data to the proxy payment device 40 so that payment processing is directly carried out between the devices (or as if the intermediary device 30 does not exist).

The intermediary device 30 may preferably have a thin plate shape about in a card size. In this way, the intermediary device 30 can be placed for use on the top surface of the physical store device 20, which facilitates the use of the intermediary device 30. Note that in this case, the intermediary device 30 communicates with both the user device 10 and the physical store device 20 for example by near field radio communication.

The intermediary device 30 does not have to be formed as a single device but may include a plurality of devices interconnected by wire. In this way, the intermediary device 30 can be used while the main body of the intermediary device 30 is provided somewhere invisible from the user such as under a worktable at which the physical store device 20 is provided (for example at a checkout at a supermarket), and only an interface unit connected to the main body by wire may be provided in a location visible to the user such as on the worktable, which facilitates the use of the intermediary device 30.

The intermediary device 30 may be connected to a plurality of physical store devices 20 (for example at checkouts at a supermarket) for example through a switching device. In this way, a plurality of users can use the proxy payment system 1 according to the embodiment at substantially the same time, simply by providing the single intermediary device 30.

### (Proxy Payment Device 40)

The proxy payment device 40 is provided on the network NW and makes a payment to the physical store device 20 on behalf of the user device 10 in response to a request sent from the intermediary device 30 over the network NW. The proxy payment device 40 may be a server computer.

### (Network NW)

The network NW may be a WAN (such as the Internet) or a LAN.

### [Exemplary Operation of Proxy Payment System according to Embodiment]

Fig. 2 is a sequence diagram for illustrating exemplary operation of the proxy payment system according to the embodiment. Now, referring to Fig. 2, the exemplary operation of the proxy payment system 1 according to the embodiment will be described.

Note that in the following exemplary operation, it is assumed that the user device 10 is provided with an IC card operating under the protocol of the second electronic money EM2 and a hardware device or software capable of reading/writing from/to the card and that the IC card of the user device 10 has been charged with a value of 1000 yen. It is assumed that the physical store device 20 operates under the protocol of the first electronic money EM1. It is also assumed that the proxy payment device 40 is provided with an IC card operating under the protocol of the first electronic money EM1 and a hardware device or software capable of reading/writing from/to the card and an IC card operating under the protocol of the second electronic money EM2 and a hardware device or software capable of reading/writing from/to the card, and these IC cards have been each charged with a value of 10,000 yen. The protocols of the first electronic money EM1 and the second electronic money EM2 are not compatible with each other and a direct payment cannot be made between them. The IC cards may be IC cards used by existing electronic payment means (such as IC cards used in Suica® and Edy®).

### (Step S101)

As shown in Fig. 2, when the user makes a purchase of 500 yen at the physical store S, the physical store device 20 transmits a payment request for a value of 500 yen according to the protocol of the first electronic money EM1 to the intermediary device 30.

### (Step S102)

Then, the intermediary device 30 transmits the payment request for the value of 500 yen according to the protocol of the first electronic money EM1 received from the physical store device 20 to the proxy payment device 40, and the proxy payment device 40 receives the payment request.

### (Step S103)

The proxy payment device 40 then transmits a request for confirming the kind of payment means available at the user device 10 to the intermediary device 30.

### (Step S104)

The intermediary device 30 then transmits the request for confirming the kind of payment means received from the proxy payment device 40 to the user device 10.

### (Step S105)

The user device 10 then transmits information indicating the kind of payment means available at the user device 10 to the intermediary device 30. Here, it is assumed that information indicating the second electronic money EM2 is transmitted.

### (Step S106)

The intermediary device 30 then transmits the information indicating the second electronic money EM2 received from the user device 10 to the proxy payment device 40, and the proxy payment device 40 receives the information.

### (Step S107)

The proxy payment device 40 then transmits a payment request for a value of 500 yen according to the protocol of the second electronic money EM2 to the intermediary device 30.

### (Step S108)

The intermediary device 30 then transmits the payment request for the value of 500 yen according to the protocol of the second electronic money EM2 received from the proxy payment device 40 to the user device 10.

### (Step S109)

The user device 10 then transmits a value of 500 yen according to the protocol of the second electronic money EM2 to the intermediary device 30. In this way, the value stored in the IC card of the user device 10 is rewritten from 1000 yen to 500 yen according to the protocol of the second electronic money EM2.

### (Step S110)

The intermediary device 30 then transmits the value of 500 yen according to the protocol of the second electronic money EM2 received from the user device 10 to the proxy payment device 40, and the proxy payment device 40 receives the value. In this way, in the proxy payment device 40, the value on the IC card operating under the protocol of the second electronic money EM2 is rewritten from 10,000 to 10,500 according to the protocol of the second electronic money EM2.

### (Step S111)

The proxy payment device 40 then transmits a value of 500 yen according to the protocol of the first electronic money EM1 to the intermediary device 30. In this way, in the proxy payment device 40, the value on the IC card operating under the protocol of the first electronic money EM1 is rewritten from 10,000 yen to 9500 yen according to the protocol of the first electronic money EM1.

### (Step S112)

Now, the intermediary device 30 transmits the value of 500 yen according to the protocol of the first electronic money EM1 received from the proxy payment device 40 to the physical store device 20, and the physical store device 20 receives the value. In this way, the physical store S receives the value of 500 yen for the purchase by the user.

As described above, in the proxy payment system 1 according to the embodiment, the proxy payment device 40 makes a payment to the physical store device 20 on behalf of the user device 10. Therefore, the user and the physical store can use electronic payment means even if the user and the physical store do not have hardware devices or software operating under the same protocol. Therefore, by using the currently available user device and physical store device instead of replacing them with new ones, the user and the physical store can use, in various situations, various electronic payment means, which could not be used in the past due to incompatibility between the respective devices.

Note that in the above description, the proxy payment device 40 receives a value of 500 yen as the amount for the purchase from the user device 10, but the proxy payment device 40 may receive a value of more than 500 yen, i.e. , a value of 500 yen for the purchase plus a proxy payment fee from the user device 10.

In the above description, it is assumed that the proxy payment device 40 is provided with the IC card operating under the protocol of the first electronic money EM1 and the IC card operating under the protocol of the second electronic money EM2, while a device provided on the network NW other than the proxy payment device 40 may be provided with these IC cards. In this case, the proxy payment device 40 reads/writes a value from/to each of the IC cards of the device by communicating with the device over the network NW.

In the above description, the user device 10 and the proxy payment device 40 are provided with IC cards and hardware devices or software capable of reading/writing from/to the cards, but the user device 10 and the proxy payment device 40 may have software that emulates them. In this case, the value is stored in the user device 10 in its own storage region and in the proxy payment device 40 in its own storage region according to the protocol of the first electronic money EM1 and the protocol of the second electronic money EM2.

In the above description, the IC card of the user is provided in the user device 10 itself but the IC card of the user may be provided on the network NW. In this case, the proxy payment device 40 makes a proxy payment by reading/writing from/to the IC card on the network NW identified as being owned by the user device 10 while communicating with the user device 10 through the intermediary device 30.

In the above description, the user device 10 makes a payment by electronic money, but the electronic payment means (protocol) is not limited to the electronic money. For example, the user device 10 can make a payment using a credit card, and in this case, the proxy payment device 40 makes a proxy payment by communicating with a device provided on the network NW other than the proxy payment device 40 and operating under the protocol of the credit card. The user device 10 can also make a payment by direct withdrawal from a bank account of the user. In this case, the proxy payment device 40 communicates with a device operating under the protocol of the withdrawal and instantaneously withdraws a corresponding amount from the bank account of the user. In either case, the proxy payment device 40 operates in response to a request sent from the intermediary device 30 over the network NW.

Note that the value consists of electronic data. The value is not limited to a currency itself but may be anything convertible into a currency. For example, the value may be a currency such as 1000 yen and an amount of dollars for 1000 yen, 1000-yenpoints convertible into the currency, or a virtual currency for 1000 yen.

While an embodiment of the present invention has been described, the description is by way of example only and the invention as recited in the scope of claims is not limited in any way by the description.

### [Reference Signs List]

- 1: Proxy payment system
- 10: User device
- 20: Physical store device
- 30: Intermediary device
- 40: Proxy payment device
- S: Physical store
- NW: Network

## Claims

1. A proxy payment system, comprising:
a user device;
a physical store device provided in a physical store;
an intermediary device provided in the physical store to communicate with the user device and the physical store device; and
a proxy payment device provided on a network to make a payment to the physical store device on behalf of the user device in response to a request sent from the intermediary device over the network.

2. A proxy payment device provided on a network to make a payment to a physical store device provided in a physical store on behalf of a user device in response to a request sent from an intermediary device over the network, the intermediary device being provided in the physical store to communicate with the user device and the physical store device.

3. A physical store device provided in a physical store to communicate, at the physical store, with an intermediary device that transmits a request to a proxy payment device over a network, the proxy payment device making a payment on behalf of the user device.

4. A user device communicating with an intermediary device at a physical store, the intermediary device transmitting a request over a network to a proxy payment device that makes a payment to a physical store device.
